# EUROPÄISCHE PATENTANMELDUNG

(11) **EP 1 992 825 A2**
(43) Veröffentlichungstag der Anmeldung: **19.11.2008**
(21) Anmeldenummer: 08008325.6
(22) Anmeldetag: 02.05.2008
(51) Int. Cl.: F15B 7/08, F16D 25/08

(54) **Geberzylinder mit einer Schmutzabdeckung**

(30) Priorität: 18.05.2007 DE 102007023278
(71) Anmelder: LuK Lamellen und Kupplungsbau Beteiligungs KG, 77815 Bühl (DE)
(72) Erfinder: Sester, Christof, 77723 Gegenbach (DE); Wagner, Vadim, 77652 Offenburg (DE)

(57) **Zusammenfassung**

Die Erfindung betrifft einen Geberzylinder mit einer Schmutzabdeckung, insbesondere für einen Geberzylinder in einer hydraulischen Strecke zur Kupplungs- oder Bremsbetätigung eines Kraftfahrzeuges, die einfach und kostengünstig herstellbar ist und dadurch eine Dicht- und Abstreiferfunktion erfüllt, wobei der Geberzylinder in seinem Innenraum eine Kolbenstange aufweist, die mit einem in diesem axial bewegbaren Kolben verbunden ist und die verbleibende Öffnung dadurch dicht verschlossen wird, indem in die Gehäusewand anstelle eines Schweißringes ein von der Kolbenstange durchdrungener elastischer Verbundkörper eingeklipst wird.

## Beschreibung

Die Erfindung bezieht sich auf einen Geberzylinder mit einer Schmutzabdeckung, insbesondere einen Geberzylinder in einer hydraulischen Strecke zur Kupplungs- oder Bremsbetätigung eines Kraftfahrzeuges mit den Merkmalen des Oberbegriffs des Anspruchs 1.

Ein Geberzylinder besteht im Wesentlichen aus einem Gehäuse mit einer axialen Bohrung, in der ein mit einer Kolbenstange verbundener Kolben axial verschiebbar geführt wird. Das Gehäuse kann dabei aus einem hohlzylindrischen Grundkörper aus Metall oder Kunststoff gebildet werden, der mit einem entsprechenden Schweißring geschlossen wird. Dabei ist eine Stirnseite des Kolbens mit hydraulischer Flüssigkeit beaufschlagbar. Ansonsten wird der Kolben gegenüber dem Gehäuse abgedichtet geführt um zu verhindern, dass weder Hydraulikflüssigkeit auftreten noch Schmutz in den Geberzylinder eindringen kann. Somit erfolgt eine Abdichtung bzw. Abdeckung insbesondere an der Stelle, wo die Kolbenstange aus dem Gehäuse des Geberzylinders herausragt.

Bei manchen Fahrzeugapplikationen kann auf eine Abdeckung zur Verhinderung von Schmutzeintrag verzichtet werden, da entweder der Geberzylinder im Pedalbock integriert ist oder es aus anderen Gründen nicht erforderlich ist, einen Schmutzschutz vorzusehen. Falls eine Fahrzeugapplikation eine Schmutzabdeckung für den Geberzylinder erforderlich macht, wird für diesen üblicherweise ein Faltenbalg mit Schmutzabstreifer verwendet.

Aus der DE-GM 71 22 529 ist ein Zylinder bekannt, bei dem der Kolben gegenüber der Kolbenstange in axialer Richtung nachgiebig federnd abgestützt wird, indem auf mindestens einer Seite des Kolbens zwischen Kolben und Kolbenstange mindestens eine Tellerfeder angeordnet ist. Die axiale Beweglichkeit des Kolbens gegenüber der Kolbenstange erfordert jedoch eine Abdichtung an der Mittenbohrung, um den Druck in beiden Arbeitsräumen nicht zu beeinflussen.

Die Aufgabe der Erfindung besteht darin, eine Schmutzabdeckung mit Abstreiferfunktion für einen Geberzylinder vorzuschlagen, die einfach und kostengünstig herstellbar ist.

Diese Aufgabe wird mit einer Schmutzabdeckung für einen Geberzylinder mit den Merkmalen des Anspruchs 1 gelöst.

Danach wird der Innenraum eines Geberzylindergehäuses, in dem ein mit einer Kolbenstange verbundener Kolben axial bewegbar geführt wird, von einem von der Kolbenstange mittig durchdrungenen elastischen Verbundkörper dichtend verschlossen. Dieser elastische Verbundkörper wird dabei in die Gehäusewand des Geberzylinders eingeklipst. Somit erfüllt die Schmutzabdeckung die Funktion eines zum Verschließen des Geberzylinders verwendeten herkömmlichen Schweißringes. Außerdem fungiert sie im Bereich der Kolbenstange als Abstreifer für an dieser anhaftenden Schmutz.

In vorteilhafter Weise besteht der Verbundkörper aus einem Grundkörper, der die Form einer Hülse aufweist, die an einem Ende mit einer umlaufenden, einen Absatz bildenden Wulst versehen ist. Diese Hülse wird mindestens teilweise insbesondere im Bereich der Wulst von einem Mantel umhüllt, dessen Material so mit dem Material des Grundkörpers, der beispielsweise aus Polyamid besteht, korrespondiert, dass es mit diesem eine feste Verbindung eingeht. Dadurch wird dieses Ende der Hülse mit einem Boden verschlossen. Die Innenfläche des Absatzes dient als Anschlag der in den Innenraum des Geberzylindergehäuses eingesetzten Hülse an dessen Gehäusewand.

Der Innendurchmesser der Hülse ist in vorteilhafter Weise dem Innendurchmesser des Gehäuses angepasst, so dass die Länge des Kolbenweges nicht eingeschränkt wird.

Zur Bildung einer Abstreiflippe ist der Durchmesser der Mittenbohrung der Ummantelung an den Durchmesser der Kolbenstange so angepasst, dass die aus einem Elastomer gebildete Ummantelung straff an deren Umfang anliegt, so dass ein Eindringen von Schmutz in den Innenraum verhindert wird. Außerdem kann keine Hydraulikflüssigkeit aus dem Geberzylinder austreten.

Auf diese Weise können durch die Ausbildung der Schmutzabdeckung als Verbundkörper mehrere unterschiedliche Funktionen von einem Bauteil ausgeführt werden. Somit übernimmt der Verbundkörper die Funktion eines Verschlusses mit Dichtwirkung und außerdem eine Abstreiferfunktion, wodurch zusätzliche Bauteile eingespart werden können.

In vorteilhafter Ausgestaltung der Erfindung weist die Hülse in axialer Richtung mehrere über ihren Umfang verteilte Schlitze bzw. Ausnehmungen auf, die einerseits die Elastizität der Hülse herauf setzen und durch die gleichzeitig Stege gebildet werden. Diese Stege sind endseitig mit radial nach außen weisenden Fortsätzen zur Bildung von Rasthaken versehen. Entsprechend dazu sind an über den Umfang verteilten Stellen, an die Gehäusewand des Geberzylinders Aussparungen versehen, in die diese Rasthaken einschnappen können. Die Anzahl, Größe und Form dieser Aussparungen sollte dabei in vorteilhafter Weise auf die Anzahl, Größe und Form der Rasthaken abgestimmt sein.

Durch das Verschließen des Geberzylinders mit der erfindungsgemäßen Schmutzabdeckung mittels einer Schnappverbindung ist die Montage schnell und einfach durchführbar.

Da die Schmutzabdeckung aus Zweikomponenten-Spritzguss ausgeführt ist, ist deren Herstellung besonders kostengünstig.

Weitere Vorteile, Merkmale und Einzelheiten der Erfindung ergeben sich aus der nachfolgenden Beschreibung eines anhand einer Zeichnung näher erläuterten Ausführungsbeispiels.

Es zeigt:

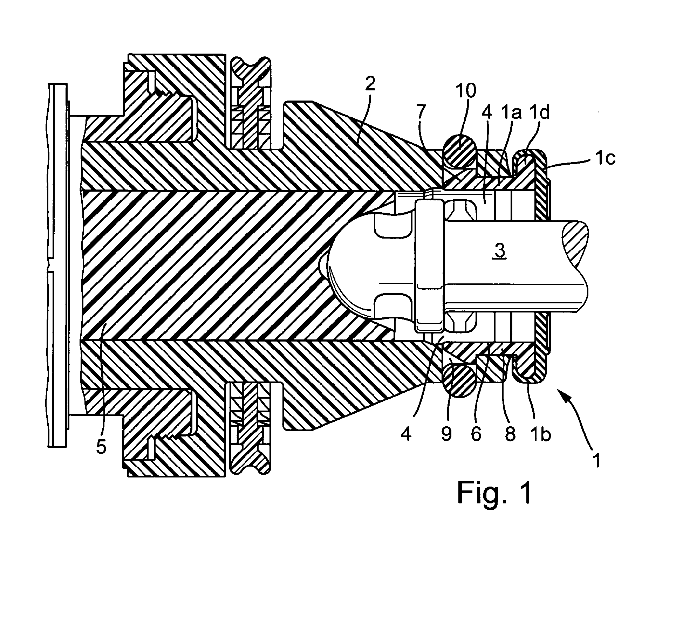

- Figur 1: Einen Geberzylinder mit einer erfindungsgemäßen Schmutzabdeckung in einer Schnittdarstellung.

In der Figur 1 ist ein Geberzylinder im Schnitt dargestellt, der aus einem hohlzylindrischen Gehäuse 2 besteht. Im Innenraum 4 des Gehäuses 2 wird ein mit einer Kolbenstange 3 verbundener Kolben 5 axial geführt. Endseitig wird der Innenraum 4 des Gehäuses von einer elastischen Schmutzabdeckung 1 verschlossen und dabei gleichzeitig sowohl radial als auch axial abgedichtet.

Die Schmutzabdeckung 1 wird aus einem Zweikomponenten-Spritzguss gefertigt, so dass ein Verbundkörper 1 entsteht. Dieser Verbundkörper 1 setzt sich aus einer Hülse 1a mit einer an einem Ende diese radial erweiterten umlaufenden Wulst 1d und einer, insbesondere im Bereich der Wulst 1d, umspritzten Ummantelung 1b zusammen. Das Material der Hülse 1a besteht dabei vorzugsweise aus Polyamid, das im Bereich der Wulst 1d von einem Elastomer umspritzt ist, so dass die Hülse 1a an einem Ende durch einen Boden 1c verschlossen wird, wobei dieser Boden 1 c mit einer Mittenbohrung versehen ist. Für die Ummantelung 1 b wird ein Elastomer gewählt, das mit dem Polyamid der Hülse 1a eine feste Verbindung eingeht. Auf diese Weise wird ein Bauteil geschaffen, das Bereiche unterschiedlicher Elastizitäten aufweist. Der Hülsenteil dient in erster Linie zur Befestigung der Schmutzabdeckung 1 am Gehäuse 2 des Geberzylinders. Dazu ist der Mantel der Hülse 1a über den Umfang verteilt mit Schlitzen versehen, so dass Stege 8 stehen bleiben. An diese Stege 8 sind radial nach außen Fortsätze angespritzt, die die Form eines Hakens haben und somit als Rasthaken 7 bezeichnet werden. Diese Rasthaken 7 dienen zur Herstellung einer Verbindung mit dem Gehäuse 2 des Geberzylinders, indem diese in Aussparungen 9 eingreifen, die ebenfalls über den Umfang verteilt in das Gehäuse 2 des Geberzylinders eingebracht sind. Die Form und Größe dieser Aussparungen 9 ist dabei an die Form und Größe der Rasthaken 7 angepasst. Nach der Herstellung der Verbindung durch Verschnappen der Schmutzabdeckung 1 mit dem Gehäuse 2 des Geberzylinders wird die Verbindungsstelle mit einer Dichtung in Form eines Dichtringes 10 abgedichtet, der in eine im Gehäuse 2 dafür vorgesehenen Nut eingelegt wird.

Wie aus der Figur 1 ersichtlich ist, wird der durch die Ummantelung 1 b der Hülse 1a entstandene Boden 1 c des Verbundkörpers 1 und somit die Schmutzabdeckung 1 von der Kolbenstange 3 durchdrungen. Dieser eine höhere Elastizität aufweisende Boden 1 c dient dazu, eine Abstreiferfunktion in erster Linie für an der Kolbenstange angelagerten Schmutz zu übernehmen, indem der Durchmesser der Mittenbohrung entsprechend an den Durchmesser der Kolbenstange angepasst ist. Außerdem ist damit die Abdichtung an dieser Mittenbohrung gewährleistet.

### Bezugszeichenliste

- 1: Schmutzabdeckung/Verbundkörper
- 1a: Hülse
- 1b: Ummantelung
- 1c: Boden
- 1d: Wulst
- 2: Gehäuse
- 3: Kolbenstange
- 4: Innenraum des Gehäuses
- 5: Kolben
- 6: Gehäusewand
- 7: Rasthaken
- 8: Steg
- 9: Aussparungen
- 10: Dichtung

## Patentansprüche

1. Geberzylinder mit einer Schmutzabdeckung, der im Innenraum (4) seines Gehäuses (2) eine mit einem Kolben (5) verbundene, axial bewegbare Kolbenstange (3) aufweist, wobei die verbleibende Öffnung des Innenraums (4) des Gehäuses (2) zwischen einer Gehäusewand (6) und der Kolbenstange (3) mit Hilfe eines Faltenbalges abgedichtet wird, **dadurch gekennzeichnet, dass** zur Abdichtung in die Gehäusewand (6) ein von der Kolbenstange (3) mittig durchdrungener elastischer Verbundkörper (1) eingeklipst wird.

2. Geberzylinder nach Anspruch 1, **dadurch gekennzeichnet, dass** der elastische Verbundkörper (1) aus einer, einen Grundkörper bildenden Hülse (1a), mit einer endseitigen umlaufenden Wulst (1d) gebildet wird, und die Wulst (1d) von einem anderen, zum Material er Hülse (1a) korrespondierenden Material fest verbunden ummantelt ist.

3. Geberzylinder nach Anspruch 1 und 2, **dadurch gekennzeichnet, dass** der Innendurchmesser der Hülse (1a) an den Innendurchmesser des Gehäuses (2) angepasst ist.

4. Geberzylinder nach Anspruch 1 und 2, **dadurch gekennzeichnet, dass** die Ummantelung (1 b) mit einer Mittenbohrung versehen ist, deren Durchmesser an den Durchmesser der Kolbenstange (3) angepasst ist.

5. Geberzylinder nach Anspruch 1 und 2, **dadurch gekennzeichnet, dass** die Hülse (1a) aus Polyamid besteht.

6. Geberzylinder nach Anspruch 1 und 2, **dadurch gekennzeichnet, dass** die Hülse (1a) in axialer Richtung mehrere über den Umfang verteilte Schlitze aufweist.

7. Geberzylinder nach Anspruch 1, 2 und 6, **dadurch gekennzeichnet, dass** die zwischen den Schlitzen angeordneten Stege (8) endseitig mit in radialer Richtung nach außen weisenden Fortsätzen zur Bildung von Rasthaken (7) versehen sind.

8. Geberzylinder nach Anspruch 1, **dadurch gekennzeichnet, dass** in die Gehäusewand (6) mehrere über den Umfang verteilte Aussparungen (9) eingebracht sind.

9. Geberzylinder nach Anspruch 8, **dadurch gekennzeichnet, dass** die Anzahl der Aussparungen der Anzahl der Rasthaken (7) entspricht.

10. Geberzylinder nach Anspruch 1 und 2, **dadurch gekennzeichnet, dass** die Ummantelung (1 b) aus einem Elastomer gebildet wird.
